# EUROPÄISCHE PATENTSCHRIFT

(11) **EP 1 010 567 B1**
(45) Veröffentlichungstag und Bekanntmachung des Hinweises auf die Patenterteilung: **25.02.2004**
(21) Anmeldenummer: 99122601.0
(22) Anmeldetag: 13.11.1999
(51) Int. Cl.: B60K 31/04

(54) **Verfahren zur Fahrgeschwindigkeitsregelung eines Kraftfahrzeuges**
Method for controlling vehicle cruise speed
Méthode pour la régulation de la vitesse d'un véhicule

(30) Priorität: 17.12.1998 DE 19858294
(43) Veröffentlichungstag der Anmeldung: 21.06.2000
(73) Patentinhaber: DaimlerChrysler AG, 70567 Stuttgart (DE)
(72) Erfinder: Linden, Thomas, 70327 Stuttgart (DE)

(56) Entgegenhaltungen:
- DE-A- 3 523 352
- DE-A- 19 509 492
- US-A- 5 382 206

## Beschreibung

Die Erfindung bezieht sich auf ein Verfahren zur Fahrgeschwindigkeitsregelung eines Kraftfahrzeuges nach dem Oberbegriff des Anspruchs 1.

Ein derartiges Verfahren ist aus der Patentschrift DE 44 43 219 C1 bekannt. Auch beschreibt beispielsweise die Offenlegungsschrift DE 195 09 492 A1 ein derartiges Verfahren. Bei diesen Fahrgeschwindigkeitsregelverfahren wird die Istgeschwindigkeit, solange sie noch relativ weit von der Sollgeschwindigkeit entfernt ist, durch eine Beschleunigungsregelung in Richtung der vorgebbaren Sollgeschwindigkeit verändert. Wenn sie dann ein vorgebbares Geschwindigkeitsregelintervall erreicht hat, das die Sollgeschwindigkeit enthält, wird sie durch eine Geschwindigkeitsregelung auf die Sollgeschwindigkeit eingeregelt. Dies läßt sich z.B. durch eine Fahrgeschwindigkeitsregeleinrichtung erreichen, die parallel einen Beschieunigungsregelkreis und einen Geschwindigkeitsregelkreis aufweist, zwischen denen entsprechend umgeschaltet werden kann. Der Beschleunigungsregelkreis wird primär zum Heranfahren an die Sollgeschwindigkeit benutzt, die je nach Fall auch eine Maximalgeschwindigkeit sein kann, während der Geschwindigkeitsregelkreis primär zur Konstantfahrt eingesetzt wird.

Durch den Einsatz des Beschleunigungsregelkreises läßt sich die Istgeschwindigkeit, wenn sie noch relativ weit von der Sollgeschwindigkeit entfernt ist, zügig in Richtung der Sollgeschwindigkeit verändern. Die Umschaltung auf die Geschwindigkeitsregelung rechtzeitig vor Erreichen der Sollgeschwindigkeit erlaubt ein optimales Heranführen der Istgeschwindigkeit an die Sollgeschwindigkeit ohne merkliche Überschwingungseffekte.

Für die Beschleunigungsregelung und die Geschwindigkeitsregelung sind jeweils mehrere unterschiedliche, von den vorhandenen Getriebegangstufen eines Antriebsgetriebes des Kraftfahrzeugs abhängige Regelparametersätze vorhanden, zwischen denen bei Gangwechseln umgeschaltet wird. Diese Regelparametersätze sind herkömmlicherweise auf einen stationären Fahrzustand abgestimmt, der auf das Fahren in der Ebene abgestellt ist. Die Umschaltung von der Beschleunigungs- zur Geschwindigkeitsregelung erfolgt bei Eintritt der Istgeschwindigkeit in das vorgegebene Geschwindigkeitsregelintervall, d.h. dann, wenn der Differenzbetrag zwischen Ist- und Sollgeschwindigkeit einen vorgebbaren Wert unterschreitet, der gleich oder größer null vorgegeben ist. Dieser Umschalt-Differenzschwellwert ist so gewählt, daß mit den gewählten Regelparametern beim Fahren in der Ebene ein optimales Einschwingen der Regelung erfolgt, d.h. ein möglichst gleichmäßiges rasches Annähern der Ist- an die Sollgeschwindigkeit ohne merkliche Regelschwingungen. Beim Befahren einer Gefällstrecke besteht hingegen die Gefahr, daß diese Regelparameterabstimmung auf das Fahren in der Ebene auf grund eines gefällebedingten Beschleunigungsüberschusses zu einem spürbar schlechteren Einschwingverhalten mit einem deutlichen Überschwingen führt, da die Regelparameter nicht für diesen Fahrzustand optimiert sind.

Aus der DE 195 47 716 A1 ist ein Verfahren zum Regeln bzw. Begrenzen der Geschwindigkeit eines Kraftfahrzeuges bekannt. Das Umschalten von Beschleunigungs- auf Geschwindigkeitsregelung erfolgt dann, wenn die Differenz von Soll- und Istgeschwindigkeit einen bestimmten Wert unterschreitet. Bei diesem Übergang wird bei Bergauffahrt ein von der auf das Kraftfahrzeug einwirkenden Belastung abhängiger Adaptionswert erzeugt, der als zusätzlicher Anteil auf das Ausgangssignal des Geschwindigkeitsreglers aufgeschältet wird. Mit dieser Maßnahme sollen bei Bergauffahrt Einbrüche im Regelverlauf unterbunden werden. Für Strecken mit merklichem Gefälle lassen sich mit diesem Verfahren signifikante Überschwingungen der Regelung nicht zuverlässig verhindern.

Die DE 692 08 092 T2 beschreibt ein System zur Geschwindigkeitsregelung mit variabler Verstärkung in Abhängigkeit von der Geschwindigkeitsabweichung. In Abhängigkeit vom Betriebszustand des Kraftfahrzeuges werden Reglerkoeffizienten aus einem Speicher ausgelesen. Dabei ist eine Umschaltung zwischen Beschleunigungs- und Geschwindigkeitsregler nicht vorgesehen.

Die US 5 382 206 offenbart ein Geschwindigkeitsregelsystem für ein Kraftfahrzeug, bei dem dynamische Eigenschaften des Fahrzeugs ermittelt und der Geschwindigkeitsregelung zugrundegelegt werden. Die dynamischen Eigenschaften werden dabei auf einen imaginären Arbeitspunkt bezogen, welcher in Abhängigkeit der eingestellten Gangstufe und des Kupplungszustands vorgegeben wird und von statischen Eigenschaften des Fahrzeugs unabhängig ist. Eine Umschaltung zwischen einem Beschleunigungsregler und Geschwindigkeitsregler ist nicht vorgesehen.

Der Erfindung liegt als technisches Problem die Bereitstellung eines Fahrgeschwindigkeitsregelverfahrens der eingangs genannten Art zugrunde, das für das Befahren von Fahrstrecken mit merklichen Fahrbahnsteigungswerten, insbesondere Strecken mit merklichem Gefälle, ein vergleichbar gutes Einschwingverhalten der Regelung ohne signifikante Überschwingungen ermöglicht wie beim Fahren in der Ebene.

Die Erfindung löst dieses Problem durch die Bereitstellung eines Fahrgeschwindigkeitsregelverfahrens mit den Merkmalen des Anspruchs 1. Bei diesem Verfahren wird beim Umschalten von der Beschleunigungs- auf die Geschwindigkeitsregelung der Istwert einer Fahrbahnsteigungs-Kenngröße ermittelt, d.h. einer Kenngröße, die ein Maß für die momentane Fahrbahnsteigung ist. Der für die anschließende Geschwindigkeitsregelung verwendete Geschwindigkeitsregelparametersatz wird dann fahrbahnsteigungsangepaßt in Abhängigkeit vom ermittelten Istwert der Fahrbahnsteigungs-Kenngröße aus mehreren, für verschiedene mögliche Werte der Fahrbahnsteigungs-Kenngröße unterschiedlich vorgegebenen Geschwindigkeitsregelparametersätzen passend ausgewählt. So kann beim Fahren in der Ebene der übliche, hierfür optimale Standard-Geschwindigkeitsparametersatz, beim Befahren einer Gefällstrecke hingegen ein davon verschiedener, an den vorliegenden negativen Fahrbahnsteigungswert besser angepaßter Geschwindigkeitsregelparametersatz verwendet werden, der dann für diese Fahrsituation zum gleichen optimalen Einschwingverhalten führt, wie dies für den Standard-Geschwindigkeitsregelparametersatz beim Fahren in der Ebene gilt.

Bei einem nach Anspruch 2 weitergebildeten Verfahren wird als Fahrbahnsteigungs-Kenngröße die Beschleunigungsdifferenz zwischen der Istbeschleunigung und einem vorgebbaren Beschleunigungsnormalwert herangezogen. Der Beschleunigungsnormalwert stellt hierbei denjenigen Beschleunigungswert dar, den die Fahrgeschwindigkeitsregelung beim Fahren in der Ebene für den Fall eines optimalen Einschwingens der Regelung beim Umschaltzeitpunkt von der Beschleunigungs- auf die Geschwindigkeitsregelung erreicht. In weiterer Ausgestaltung dieser Maßnahme wird gemäß Anspruch 3 der Beschleunigungsnormalwert in Abhängigkeit von der Istgeschwindigkeit und einer eingelegten Getriebegangstufe variabel vorgegeben, z.B. aus gangsstufenabhängigen Kennlinien über der Istgeschwindigkeit ermittelt. Der für die ausgelöste Geschwindigkeitsregelung benutzte Regelparametersatz wird dann vorzugsweise ebenfalls anhand von gangstufenabhängigen Kennlinien unter Berücksichtigung der ermittelten Beschleunigungsdifferenz zwischen der Istbeschleunigung im Umschaltzeitpunkt und dem Beschleunigungsnormalwert festgelegt.

Bei einem nach Anspruch 4 weitergebildeten Verfahren wird der beim Umschalten von der Beschleunigungs- auf die Geschwindigkeitsregelung für die anschließende Geschwindigkeitsregelung ausgewählte Geschwindigkeitsregelparametersatz für eine vorgebbare Zeitdauer beibehalten, wonach dann auf den Standard-Geschwindigkeitsregelparametersatz stoßfrei, d.h. ohne Unstetigkeiten im Geschwindigkeitsreglerausgangssignal, auf den Standard-Geschwindigkeitsregelparametersatz übergegangen wird.

Eine vorteilhafte Ausführungsform der Erfindung ist in den Zeichnungen dargestellt und wird nachfolgend beschrieben. Hierbei zeigen:
- Fig. 1: ein Flußdiagramm eines den Übergang von einer Beschleunigungs- auf eine anschließende Geschwindigkeitsregelphase betreffenden Teil eines Fahrgeschwindigkeitsregelverfahrens und
- Fig. 2: zwei zeitsynchrone Diagramme beispielhafter Verläufe der Fahrgeschwindigkeit und des Motormoments für ein exemplarisches Fahrbeispiel gemäß dem Verfahren von Fig. 1 verglichen mit einem herkömmlichen Verfahren.

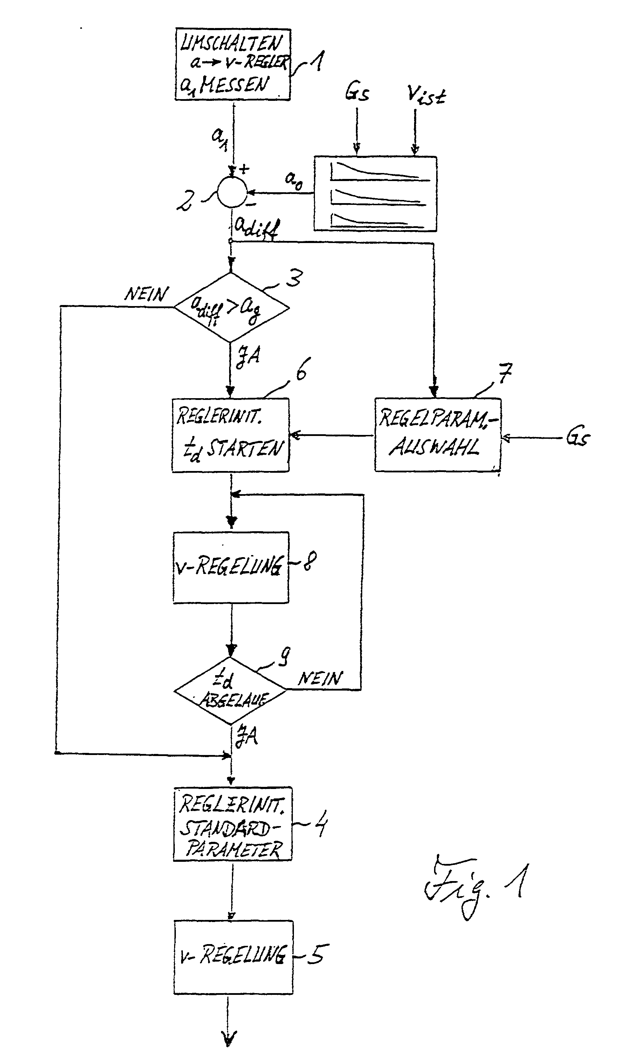

Fig. 1 zeigt den hier interessierenden Teil eines Fahrgeschwindigkeitsregelverfahrens, wie es insbesondere für Automobile geeignet ist. Das Fahrgeschwindigkeitsregelverfahren beinhaltet in herkömmlicher Weise das Durchführen von Beschleunigungsregelphasen, solange die Istgeschwindigkeit außerhalb eines die Sollgeschwindigkeit enthaltenden Geschwindigkeitsregelintervalls liegt, d.h. um mehr als einen vorgebbaren Abstand größer null von der Sollgeschwindigkeit entfernt ist, sowie von Geschwindigkeitsregelphasen, solange die Istgeschwindigkeit innerhalb des Geschwindigkeitsregelintervalls liegt.

Während der Beschleunigungsregelphasen wird die Istbeschleunigung auf eine Sollbeschleunigung eingeregelt, die so gewählt wird, daß die Istgeschwindigkeit rasch in Richtung der Sollgeschwindigkeit verändert wird. Je nach Anwendungsfall kann die Sollbeschleunigung während einer Beschleunigungsregelphase variabel in Abhängigkeit bestimmter Einflußgrößen verändert werden, z.B. in Abhängigkeit von der Differenz zwischen Ist- und Sollgeschwindigkeit derart, daß die Sollbeschleunigung mit abnehmendem Abstand der Ist- von der Sollgeschwindigkeit verringert wird. Wenn dann die Istgeschwindigkeit das vorgegebene Geschwindigkeitsregelintervall erreicht hat, d.h. der Abstand der Ist- von der Sollgeschwindigkeit den vorgegebenen Abstandsschwellwert unterschritten hat, wird von der Beschleungigungsregelung auf eine anschließende Geschwindigkeitsregelphase umgeschaltet, in welcher die Ist- auf die Sollgeschwindigkeit eingeregelt wird.

Zur Verbesserung des Einschwingverhaltens der Fahrgeschwindigkeitsregelung sind nun in Abhängigkeit von der Fahrbahnsteigung verschiedene Geschwindigkeitsregelparametersätze vorgesehen, aus denen für die anschließende Geschwindigkeitsregelphase derjenige ausgewählt wird, welcher der momentan vorliegenden Fahrbahnsteigung am besten entspricht. Insbesondere werden für das Befahren von Gefällstrecken andere Parametersätze gewählt als für das Fahren in der Ebene, für das ein herkömmlicher Standard-Geschwindigkeitsparametersatz benutzt wird. Es versteht sich, daß der jeweils benutzte Geschwindigkeitsparametersatz zusätzlich in Abhängigkeit von der Istgeschwindigkeit und von der eingelegten Gangstufe eines Antriebsgetriebes bestimmt wird, wozu in an sich bekannter Weise entsprechende Kennlinien für die Regelparameter in Abhängigkeit von den beiden Einflußgrößen Istgeschwindigkeit und Gangstufe vorgegeben werden. Die Istgeschwindigkeit und die eingelegte Gangstufe werden zu diesem Zweck während der Fahrt sensorisch erfaßt, wie dies dem Fachmann geläufig ist.

Zur Durchführung dieses Verfahrens, das zu einem verbesserten Einschwingverhalten nach Übergang von der Beschleunigungs- zur Geschwindigkeitsregelung besonders beim Befahren von Gefällstrecken führt, kann eine der aus dem eingangs zitierten Stand der Technik bekannten Regeleinrichtungen dienen, was hier keiner näheren Erläuterung bedarf. Insbesondere kann eine solche verfahrensdurchführende Regeleinrichtung einen Geschwindigkeitsregler und einen dazu parallelen Beschleunigungsregler beinhalten, zwischen denen selbsttätig umgeschaltet wird, so daß entweder der Geschwindigkeitsregelkreis oder der Beschleunigungsregelkreis aktiv ist.

Die charakteristische Vorgehensweise im Anschluß an die Umschaltung von der Beschleunigungs- auf die Geschwindigkeitsregelung, wie sie in Fig. 1 veranschaulicht ist, beinhaltet in einem ersten Schritt 1 neben der Umschaltung vom Beschleunigungs- auf den Geschwindigkeitsregler eine Messung der Istbeschleunigung a₁ zum Umschaltzeitpunkt. In einem anschließenden Schritt 2 wird die Beschleunigungsdifferenz a_{diff}=a₁-a₀ zwischen der gemessenen Istbeschleunigung a₁ und einem Beschleunigungsnormalwert a₀ berechnet, der aus vorgegebenen Kennlinien in Abhängigkeit von der Istgeschwindigkeit vᵢₛₜ und der eingelegten Antriebsgetriebe-Gangstufe Gs ermittelt wird. Diese Kennlinien sind so bestimmt, daß der daraus gewonnene Beschleunigungsnormalwert a₀ demjenigen Beschleunigungswert entspricht, der beim Fahren in der Ebene zur Erzielung eines optimalen Einschwingverhaltens der Regelung zum Zeitpunkt der Umschaltung von der Beschleunigungs- auf die Geschwindigkeitsregelung vorliegen sollte. Die berechnete Beschleunigungsdifferenz a_{diff} besitzt daher beim Fahren in der Ebene den Wert null oder, im Fall einer geringfügigen Beschleunigungsregelabweichung zum Umschaltzeitpunkt, einen allenfalls geringfügig hiervon verschiedenen Wert. Befährt das Fahrzeug hingegen eine Gefällstrecke, steigt die berechnete Beschleunigungsdifferenz a_{diff} mit zunehmender negativer Fahrbahnsteigung an, da sich das Fahrzeug ohne Antriebsmoment selbst beschleunigt und die Istbeschleunigung daher zunehmend vom auf das Fahren in der Ebene bezogenen Beschleunigungsnormalwert abweicht. Die berechnete Beschleunigungsdifferenz a_{diff} stellt daher eine Fahrbahnsteigungs-Kenngröße dar, die ein brauchbares Maß für die momentane negative Fahrbahnsteigung ist. Alternativ kann die Fahrbahnsteigung selbstverständlich auch in anderer Weise erfaßt werden, z.B. mittels eines entsprechenden Neigungssensors im Fahrzeug.

In einem Abfrageschritt 3 wird dann festgestellt, ob die berechnete Beschleunigungsdifferenz a_{diff} größer als ein vorgegebener Differenzschwellwert a_{g} ist, der gleich null oder, als Sicherheit gegenüber kleinen Meß- oder Berechnungsungenauigkeiten, auf einen geringfügig über null liegenden Wert festgesetzt wird. Ist dies nicht der Fall, wird darauf geschlossen, daß das Fahrzeug keine Gefällstrecke befährt, und es wird dann für die anschließende Geschwindigkeitsregelung im nächsten Schritt 4 ein Standard-Geschwindigkeitsregelparametersatz für die Initialisierung des Geschwindigkeitsreglers gewählt. Mit diesem Parametersatz berechnet dann der Geschwindigkeitsregler im Schritt 5 während der Geschwindigkeitsregelphase ein Stellsignal, mit dem die Istgeschwindigkeit auf die vorgegebene Sollgeschwindigkeit eingeregelt wird, wobei der Standard-Geschwindigkeitsregelparametersatz über die gesamte Dauer der Geschwindigkeitsregelphase beibehalten wird, bis die Fahrgeschwindigkeitsregelung deaktiviert wird.

Wird hingegen im oben genannten Abfrageschritt 3 festgestellt, daß die Beschleunigungsdifferenz a_{diff} größer als der Differenzschwellwert a_{g} ist, wird daraus auf das Befahren einer Gefällstrecke geschlossen. In diesem Fall erfolgt in einem nächsten Schritt 6 eine Initialisierung des Geschwindigkeitsreglers mit einem an diese Situation bestangepaßten Geschwindigkeitsregelparametersatz, der in einem zugehörigen Schritt 7 in Abhängigkeit von der eingelegten Getriebegangstufe Gs und der berechneten Beschleunigungsdifferenz a_{diff} aus einer Mehrzahl von vorab abgelegten Parametersätzen ausgewählt wird. Diese gefällespezifischen Geschwindigkeitsregelparametersätze können dabei in Form entsprechender Kennlinien abgelegt sein, welche die für den Geschwindigkeitsregler verwendeten Regelparameter in Abhängigkeit von der Getriebegangstufe und von der den Grad des Gefälles indizierenden Beschleunigungsdifferenz a_{diff} festlegen.

Gleichzeitig mit der Initialisierung des Geschwindigkeitsreglers mit dem gefälleangepaßten Geschwindigkeitsregelparametersatz wird ein Zeitzähler zum Abzählen einer vorgegebenen Zeitdauer t_{d} gestartet. Anschließend beginnt die Geschwindigkeitsregelphase durch Aktivieren des Geschwindigkeitsreglers mit dem gewählten, gefälleangepaßten Geschwindigkeitsregelparametersatz (Schritt 8). Dabei wird mit einem Abfrageschritt 9 laufend geprüft, ob die vom Zeitzähler abgezählte Zeitdauer t_{d} seit Beginn der Geschwindigkeitsregelphase abgelaufen ist. Solange dies nicht der Fall ist, setzt der Geschwindigkeitsregler die Geschwindigkeitsregelung mit dem ausgewählten gefälleangepaßten Geschwindigkeitsregelparametersatz fort. Ist hingegen die vorgegebene Zeitdauer t_{d} abgelaufen, wird stoßfrei vom bisherigen gefälleangepaßten Regelparametersatz auf den Standard-Geschwindigkeitsregelparametersatz übergegangen, wozu der Geschwindigkeitsregler entsprechend neu initialisiert wird. Im weiteren nimmt dann der Geschwindigkeitsregler die Geschwindigkeitsregelung anhand des Standard-Geschwindigkeitsparametersatzes vor. Die Zeitdauer t_{d} bestimmt folglich die Dauer der anfänglichen Geschwindigkeitsregelphase mit dem ausgewählten gefälleangepaßten Geschwindigkeitsregelparametersatz und ist hierzu geeignet derart vorgegeben, daß der Geschwindigkeitsregler während dieser Zeit den gefällebedingten Beschleunigungsüberschuß ruckfrei abbauen kann, so daß dann anschließend ebenso ruckfrei auf die Geschwindigkeitsregelung mit dem normalen Standard-Regelparametersatz übergegangen werden kann.

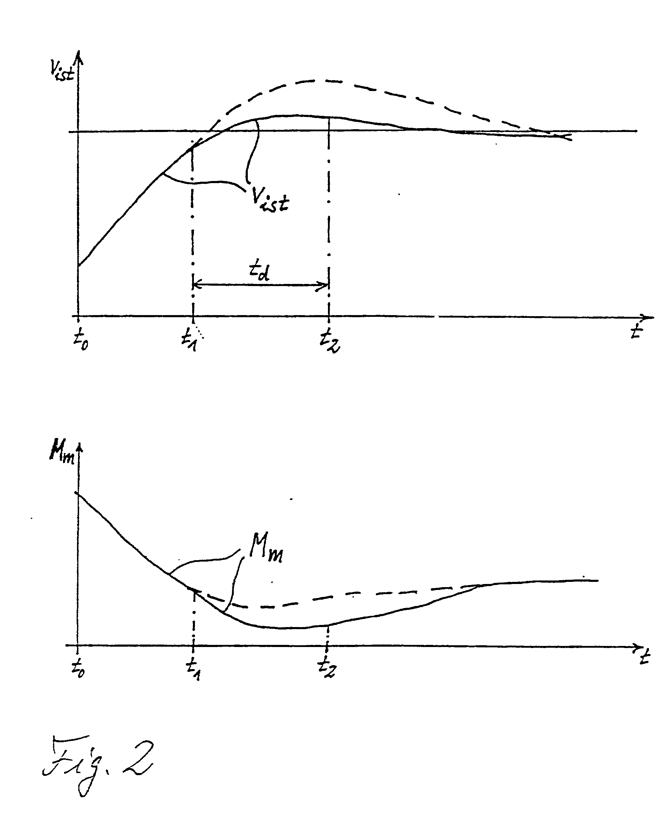

In den Diagrammen von Fig. 2 ist in Diagrammform beispielhaft die Wirkungsweise des Verfahrens gemäß Fig. 1 illustriert, wobei im oberen Diagramm die Istgeschwindigkeit vᵢₛₜ in Abhängigkeit von der Zeit t und im unteren Diagramm zeitsynchron der zeitliche Verlauf des Motormoments Mₘ dargestellt ist.

Zu einem Anfangszeitpunkt t₀ der Diagramme von Fig. 2 ist die Fahrgeschwindigkeitsregelung mit einer Beschleunigungsregelphase aktiv, da sich die Istgeschwindigkeit vᵢₛₜ unterhalb eines Geschwindigkeitsregelintervalls für Geschwindigkeitsregelphasen befindet, dessen unterer Intervallendwert vₛₒₗₗ-v_{G} um einen vorgegebenen Abstandswert v_{G} unter der gewünschten Sollgeschwindigkeit vₛₒₗₗ liegt. Durch die Beschleunigungsregelphase wird die Istgeschwindigkeit vᵢₛₜ zügig in Richtung der Sollgeschwindigkeit vₛₒₗₗ gesteigert. Zu einem Zeitpunkt t₁ erreicht die Istgeschwindigkeit vᵢₛₜ den unteren Intervallendwert vₛₒₗₗ-v_{G} des Geschwindigkeitsregelintervalls, wodurch die Fahrgeschwindigkeitsregelung von der bisherigen Beschleunigungs- auf eine Geschwindigkeitsregelphase umgeschaltet wird.

Es sei nun der Fall betrachtet, daß das Fahrzeug gerade eine Gefällstrecke befährt. Wenn dann für die einsetzende Geschwindigkeitsregelphase sofort der oben erwähnte, auf das Fahren in der Ebene optimierte Standard-Geschwindigkeitsregelparametersatz vewendet würde, würde sich für die Istgeschwindigkeit vᵢₛₜ qualitativ der gestrichelt angedeutete, weitere Verlauf ergeben, der erkennbar ein beträchtliches Überschwingen der Istgeschwindigkeit vᵢₛₜ über die Sollgeschwindigkeit vₛₒₗₗ beinhaltet. Da nun jedoch erfindungsgemäß zunächst der entsprechend der Gefällestärke passend ausgewählte, gefälleangepaßte Geschwindigkeitsregelparametersatz verwendet wird, ergibt sich eine verbesserte, raschere Annäherung der Istgeschwindigkeit vᵢₛₜ an die Sollgeschwindigkeit vₛₒₗₗ mit deutlich reduziertem Überschwingen, wie durch die durchgezogene Linie wiedergegeben. Nach der vorgegebenen Zeitdauer t_{d} wird dann zu einem entsprechenden Zeitpunkt t₂=t₁+t_{d} der Geschwindigkeitsregler vom gefälleangepaßten auf den Standard-Geschwindigkeitsregelparametersatz umgestellt, mit dem dann im folgenden weiter die Istgeschwindigkeit vᵢₛₜ um die Sollgeschwindigkeit vₛₒₗₗ geregelt wird.

Das untere Diagramm von Fig. 2 zeigt den Einfluß des zu Beginn der Geschwindigkeitsregelphase verwendeten gefällespezifischen Geschwindigkeitsregelparametersatzes auf das Motormoment Mₘ, wie es mit der durchgezogenen Linie wiedergegeben wird, im Vergleich zur herkömmlichen sofortigen Benutzung des Standard-Geschwindigkeitsregelparametersatzes. Durch die anfängliche Heranziehung des ausgewählten, gefälleangepaßten Geschwindigkeitsregelparametersatzes wird das sich schon am Ende der Beschleunigungsregelphase mit Annäherung der Istgeschwindigkeit vᵢₛₜ an die Sollgeschwindigkeit vₛₒₗₗ verringernde Motormoment Mₘ von der im Zeitpunkt t₁ einsetzenden Geschwindigkeitsregelung noch stärker reduziert als bei der herkömmlichen sofortigen Heranziehung des Standard-Geschwindigkeitsregelparametersatzes, dessen Motormomenteinfluß zum Vergleich gestrichelt angedeutet ist. Diese stärkere Motormomentreduktion durch den gefälleangepaßten Geschwindigkeitsregelparametersatz kompensiert den gefällebedingten Beschleunigungsüberschuß beim Umschalten von der Beschleunigungs- auf die Geschwindigkeitsregelung. Nach Übergang vom gefälleangepaßten auf den Standard-Geschwindigkeitsregelparametersatz zum Zeitpunkt t₂ steigt dann das Motormoment Mₘ allmählich auf einen für die weitere Geschwindigkeitsregelung mit dem Standard-Geschwindigkeitsregelparametersatz passenden Wert an. Die Zeitdauer t_{d}, in welcher der Geschwindigkeitsregler den gefälleangepaßten Regelparametersatz verwendet, ist zweckmäßigerweise so gewählt, daß der Geschwindigkeitsregler bis zum Zeitpunkt t₂ der Umstellung auf den Standard-Geschwindigkeitsregelparametersatz das Motormoment in stetiger Weise so weit reduziert hat, daß der gefällebedingte Beschleunigungsüberschuß wenigstens weitestgehend abgebaut ist, so daß die Umstellung auf den Standard-Geschwindigkeitsregelparametersatz stoßfrei ohne störende Beschleunigungsruckeffekte erfolgen kann.

Das oben betrachtete Ausführungsbeispiel macht deutlich, daß durch das erfindungsgemäße Verfahren der Fahrgeschwindigkeitsregelung ein besonders ruckfreier und sanfter Übergang von einer anfänglichen Beschleunigungsregelphase, in welcher die Istgeschwindigkeit noch relativ weit von der Sollgeschwindigkeit entfernt ist, zu einer anschließenden Geschwindigkeitsregelphase, in welcher die Istgeschwindigkeit auf die Sollgeschwindigkeit eingeregelt wird, unabhängig von der Fahrbahnsteigung in gleichbleibender Güte ermöglicht wird, so daß insbesondere beim Befahren von Gefällstrecken keine signifikant stärkeren Einschwingvorgänge auftreten wie beim Fahren in der Ebene.

## Patentansprüche

1. Verfahren zur Fahrgeschwindigkeitsregelung eines Kraftfahrzeuges, bei dem
- die Istgeschwindigkeit (vᵢₛₜ) durch eine Beschleunigungsregelung in Richtung einer vorgebbaren Sollgeschwindigkeit (vₛₒₗₗ) verändert wird, solange sie außerhalb eines vorgebbaren, die Sollgeschwindigkeit enthaltenden Geschwindigkeitsregelintervalls liegt, und durch eine Geschwindigkeitsregelung auf die Sollgeschwindigkeit eingeregelt wird, solange sie innerhalb des Geschwindigkeitsregelintervalls liegt,
**dadurch gekennzeichnet, daß**
- beim Umschalten von einer bisherigen Beschleunigungsregelung auf eine anschließende, durch Eintritt der Istgeschwindigkeit (vᵢₛₜ) in das Geschwindigkeitsregelintervall ausgelöste Geschwindigkeitsregelung der Istwert einer Fahrbahnsteigungs-Kenngröße (a_{diff}) bestimmt und für die anschließende Geschwindigkeitsregelung ein fahrbahnsteigungsangepaßter Geschwindigkeitsregelparametersatz verwendet wird, der in Abhängigkeit von dem ermittelten Fahrbahnsteigungs-Kenngrößenistwert aus mehreren, für verschiedene mögliche Fahrbahnsteigungs-Kenngrößenwerte unterschiedlich vorgegebenen, fahrbahnsteigungsspezifischen Geschwindigkeitsregelparametersätzen ausgewählt wird.

2. Verfahren nach Anspruch 1, weiter
**dadurch gekennzeichnet, daß**
als Fahrbahnsteigungs-Kenngröße die Beschleunigungsdifferenz (a_{diff}) der Istbeschleunigung (aᵢₛₜ) zu einem vorgebbaren Beschleunigungsnormalwert (a₀) verwendet wird.

3. Verfahren nach Anspruch 2, weiter
**dadurch gekennzeichnet, daß**
der Beschleuningungsnormalwert (a₀) in Abhängigkeit von der Istgeschwindigkeit (vᵢₛₜ) und der eingelegten Gangstufe (Gs) eines Antriebsgetriebes des Kraftfahrzeuges variabel vorgegeben wird.

4. Verfahren nach einem der Ansprüche 1 bis 3, weiter
**dadurch gekennzeichnet, daß**
der bei Auslösung der Geschwindigkeitsregelung ausgewählte, fahrbahnsteigungsangepaßte Geschwindigkeitsregelparametersatz für eine vorgebbare Zeitdauer (t_{d}) beibehalten und anschließend ein Standard-Geschwindigkeitsregelparametersatz verwendet wird.

## Claims

1. A process for the cruise control of a motor vehicle in which
- the actual speed (Vᵢₛₜ) is modified by an acceleration control system towards a pre-settable reference speed (Vₛₒₗₗ) as long as it lies outside a pre-settable speed control interval containing the reference speed and is ?ed at the reference speed by a speed control system as long as it remains within the speed control interval,
**characterised in that**
- when switching from initial acceleration control to subsequent speed control triggered by the entry of the actual speed (Vᵢₛₜ) into the speed control interval, the actual value of a road gradient parameter (a_{diff}) is determined and a road-gradient-adjusted speed control parameter set selected from several different pre-set road-gradient-specific speed control parameter sets for different possible road gradient parameter values dependent on the actual road gradient parameter value determined is used for the subsequent speed control.

2. A process in accordance with claim 1, further
**characterised in that**
the acceleration difference (a_{diff}) between the actual acceleration (aᵢₛₜ) and a pre-settable normal acceleration value (a₀) is used as the road gradient parameter.

3. A process in accordance with claim 2, further
**characterised in that**
the normal acceleration value (a₀) is pre-set variably dependent on the actual speed (vᵢₛₜ) and the gear (Gs) selected in a transmission in the vehicle.

4. A process in accordance with one of claims 1 to 3, further
**characterised in that**
when the speed control is triggered, a selected road-gradient-adjusted speed control parameter set is retained for a pre-settable period of time (t_{d}), after which a standard speed control parameter set is used.

## Revendications

1. Procédé de régulation de la vitesse d'un véhicule, dans lequel :
- la vitesse réelle (V_{réelle}) est modifiée par une régulation d'accélération dans le sens d'une vitesse théorique (V_{théorique}) prédéterminable tant qu'elle se situe en dehors d'un intervalle de régulation de la vitesse contenant la vitesse théorique et est régulée à la vitesse théorique par une régulation de vitesse tant qu'elle se situe à l'intérieur de l'intervalle de régulation de la vitesse,
**caractérisé en ce que**
- lors du passage d'une régulation d'accélération précédente à une régulation de vitesse déclenchée par l'entrée de la vitesse réelle (V_{réelle}) dans l'intervalle de régulation de la vitesse, on détermine la valeur réelle d'une caractéristique de pente de la chaussée (a_{diff}) et **en ce que**, pour la régulation de vitesse consécutive, on utilise un jeu de paramètres de régulation de la vitesse adapté à la pente de la chaussée, sélectionné en fonction de la valeur réelle de la caractéristique de pente déterminée parmi plusieurs jeux de paramètres de régulation de la vitesse spécifiques à la pente de la chaussée prédéterminés pour différentes valeurs possibles de la caractéristique de pente de la chaussée.

2. Procédé selon la revendication 1, **caractérisé** également en ce que l'on utilise comme caractéristique de pente de la chaussée la différence d'accélération (a_{diff}) entre l'accélération réelle (a_{réelle}) et une valeur d'accélération normale (a₀) prédéterminable.

3. Procédé selon la revendication 2, **caractérisé** également en ce que la valeur d'accélération normale (a₀) est prédéterminée de manière variable en fonction de la vitesse réelle (V_{réelle}) et du rapport de vitesse (Rᵥ) d'un engrenage de transmission du véhicule.

4. Procédé selon l'une des revendications 1 à 3, **caractérisé** également en ce que le jeu de paramètres de régulation de la vitesse adapté à la pente de la chaussée choisi lors du déclenchement de la régulation de vitesse est maintenu pendant une durée (t_{d}) prédéterminable et en ce qu'un jeu de paramètres de régulation de la vitesse standard est utilisé ensuite.
